# EUROPEAN PATENT APPLICATION

(11) **EP 1 447 429 A1**
(43) Date of publication of application: **18.08.2004**
(21) Application number: 03002963.1
(22) Date of filing: 11.02.2003
(51) Int. Cl.: C09B 1/22, C09B 55/00, C08K 5/3442, C08K 5/34, C08K 5/36

(54) **New bisanthraquinone azomethine dyes**

(71) Applicant: CLARIANT INTERNATIONAL LTD., 4132 Muttenz (CH)
(72) Inventor: Graciet, Jean-Christope, 68330 Huningue (FR)

(57) **Abstract**

The present invention relates to novel colorants based on bisanthraquinone azamethine derivatives or their metal complexes for the mass coloring of polymers, either for polar polymers such as polyamides, polyesters, polycarbonates and ABS; or for non-polar polymers such as polyethylene and polypropylene.

The novel colorants are characterized by i) a central substituted or unsubstituted annealed aromatic ring system comprising at least one heteroatom and ii) two anthraquinone moieties attached thereto by azamethine bridges.

The novel colorants provide for excellent compatibility with the polymer substrate, excellent heat stability and light fastness.

## Description

The present invention relates to novel colorants based on bisanthraquinone azamethine derivatives or their metal complexes for the mass coloring of polymers. The novel colorants are characterized by i) a central substituted or unsubstituted annealed aromatic ring system comprising at least one heteroatom and ii) two anthraquinone moieties attached thereto by azamethine bridges.
The novel colorants provide for excellent compatibility with the polymer substrate, excellent heat stability and light fastness as required for mass coloring of polar and non-polar polymers. Polar polymers are for example polyamides, polyesters, polycarbonates and ABS; non-polar polymers are olefinic polymers such as polyethylene and polypropylene.

Chemical Abstracts No. 52:17719 discloses the following bisanthraquinone azamethine derivative as a chromophore:

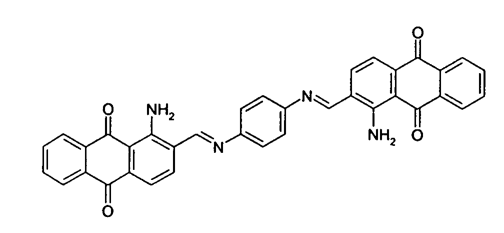

JP5017697, JP511110, JP7072332 and EP300770 (all of Mitsui Toatsu Chemicals) disclose the use of particular bisanthraquinone azamethine derivatives as suitable dyes for light-polarising films. The derivatives disclosed are the following:

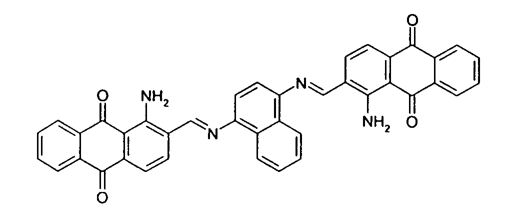

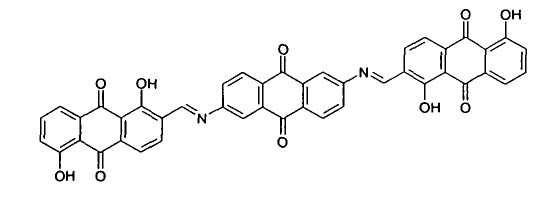

JP40001275 (Sumitomo Chemical Co.) discloses new metallized bisanthraquinone azamethine pigments for the use in lacquers and printing inks.

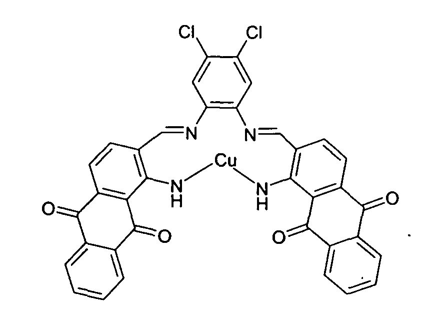

DE1060527 (Bayer AG) discloses the preparation and the use of the following bis anthraquinone azamethine dyes as pigments.

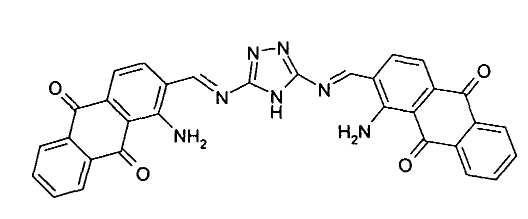

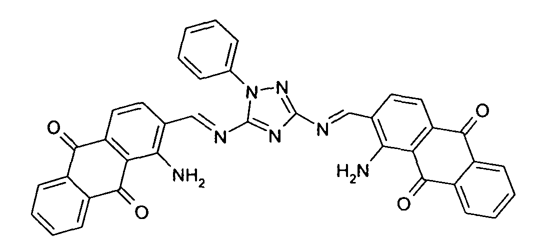

The bisanthraquinone azamethine dyes known in the art are generally not compatible with the polymer substrate to that extent, as it is required for the mass coloration of polar and non-polar polymers.

The object of the present invention therefore is to provide new heat- and lightfast bisanthraquinone azamethine dyes with excellent compatibility with the polymer substrate and therefore useful as polymer-soluble colorants for the mass coloration of polar and non-polar polymers.

Surprisingly, it has been found that the compounds of the formula (I), wherein the central substituted or unsubstituted annealed aromatic ring system A comprises at least one heteroatom, provide for the required properties to qualify as polymer-soluble dyes.

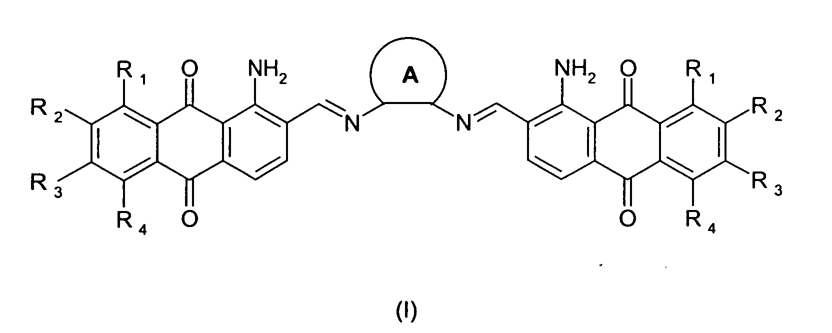

It has been further found that the fastness properties of the bisanthraquinone azamethine dyes according to formula (I) can be improved by forming metal complexes according to formula (II) without loosing the required properties to qualify as polymer-soluble dyes.

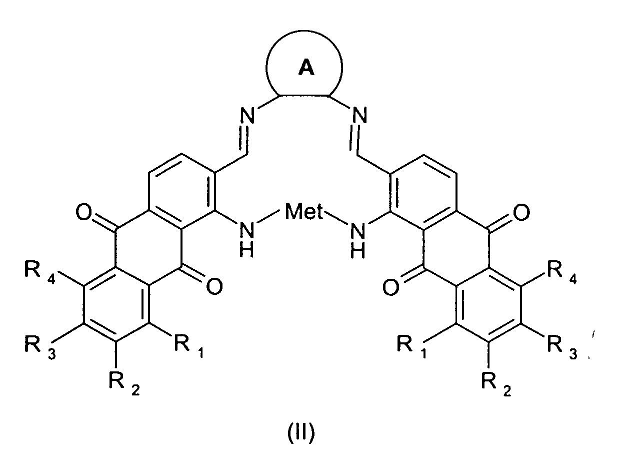

For the metallatization of the bisanthraquinone azamethine dyes according to formula (I) it is generally required, that the two azamethine bridges are attached in ortho-position to the nucleus A, as it is represented in formula (I) and (II).

In both formulae (I) and (II) the following definitions apply:
- R₁, R₂, R₃ and R₄: are independently hydrogen, halogen, R₁₁R₁₂N-, R₁₂-O- or R₁₂- S-, in which R₁₁ and R₁₂ are independently hydrogen, C₁-C₆-alkyl, C₆-C₁₀-aryl, in which the alkyl and/or aryl radicals can be substituted by hydroxyl, C₁-C₆-alkyl, C₆-C₁₀-aryl, C₁-C₆-alkoxy, C₆-C₁₀-aryloxy or halogen.
- The nucleus A: represents a substituted or unsubstituted annealed aromatic ring system comprising at least one heteroatom in either the first or the second ring or in both.
- Met: is a metal in its II+ oxidation state.

In preferred compounds of the formulae (I) and (II)
- R₁, R₂, R₃, R₄: are independently hydrogen, chlorine, bromine, methoxy, ethoxy, phenyloxy, -NH-C₆H₄-OCH₃, -O-C₆H₄-OCH₃ or -S-C₆H₄-OCH₃;
- the nucleus A: is selected from one of the moieties (1) to (4)

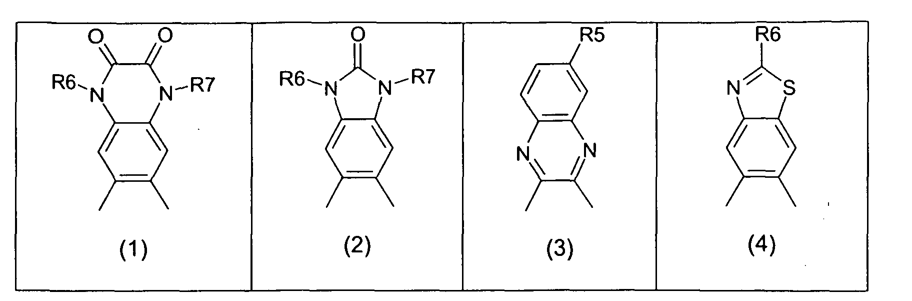

wherein
- R₅: is hydrogen, C₁-C₂₀-alkyl, halogen, R₁₁R₁₂N-, R₁₂-O- or R₁₂-S-, in which R₁₁ and R₁₂ are defined as above;
- R₆ and R₇: are independently hydrogen, C₁-C₂₀-alkyl, C₆-C₁₀-aryl, 2,2,6,6-tetramethylpiperidinyl, in which the alkyl and/or aryl radicals can be substituted by hydroxyl, C₁-C₂₀-alkyl, C₆-C₁₀-aryl C₁-C₆-alkoxy, C₆-C₁₀-aryloxy or halogen;
- Met: is a metal selected from nickel, copper or iron in its II+ oxidation state.

In more preferred compounds of the formulae (I) and (II)
- R₅: is hydrogen, chlorine, bromine, methoxy, ethoxy, phenoxy, nitro;
- R₆ and R₇: are independently hydrogen, C₁-C₁₀-alkyl, C₆-C₁₀-aryl, in which the alkyl and/or aryl radicals can be substituted by hydroxyl, C₁-C₁₀-alkyl, C₆-C₁₀-aryl, C₁-C₆-alkoxy, C₆-C₁₀-aryloxy or halogen;
- Met: is nickel, copper or iron in its II+ oxidation state.

In most preferred compounds of the formulae (I) and (II)
- R₅: is hydrogen;
- R₆ and R₇: are independently hydrogen or C₁-C₆-alkyl;
- Met: is nickel in its II+ oxidation state.

The present invention also provides a process for preparing the compounds of the formulae (I) and (II), characterized in that an 1-amino-anthraquinone-2-aldehyde of the formula (III) 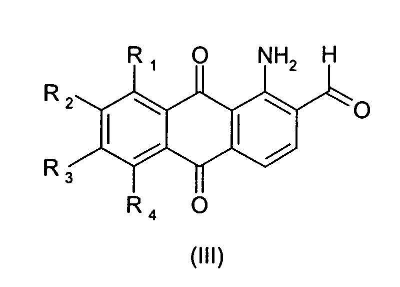 wherein R₁, R₂, R₃ and R₄ are defined as above,
is condensed with a di-amine or the salt of a di-amine according to formula (IV).

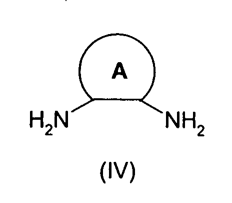

Suitable salts of the di-amine of the respective formulae (IV) are the chlorhydrate or the sulfate.

The condensation can be conducted without solvent in the melt at temperatures, for instance, of between 150°C and 300°C, preferably up to 250°C, or in an inert organic solvent at temperatures between 25°C and 300°C, preferably between 80°C and 250°C, in the presence or absence of a catalyst, at atmospheric pressure or under pressure.

Examples of suitable inert organic solvents are relatively high-boiling aliphatic or aromatic, substituted or unsubstituted hydrocarbons, examples being xylene (mixture), biphenyl, nitrobenzene, chlorobenzenes, chloronaphthalene, glycol ethers, organic acids and acid amides, especially dimethylformamide, dimethylacetamide or N-methyl-pyrrolidone. Further suitable solvents are alcohols, such as methanol, ethanol or butanol.

Examples of possible catalysts are inorganic or organic acids, such as hydrochloric or sulphuric acid, benzenesulphonic, toluenesulphonic acid, or acetic acid. The salts of organic acids, such as sodium or potassium acetate, are in many cases also suitable as catalysts.

The conversion of the dyes of formula (I) into their metal complexes according to formula (II) can be conducted by adding the corresponding metal salt in an inert organic solvent at temperatures between 25°C and 300°C, preferably between 80°C and 250°C, in the presence or absence of a catalyst, at atmospheric pressure or under pressure.

Examples of suitable solvents are relatively high-boiling aliphatic or aromatic, substituted or unsubstituted hydrocarbons, examples being xylene (mixture), biphenyl, nitrobenzene, chlorobenzenes, chloronaphthalene, glycol ethers, organic acids and acid amides, especially dimethylformamide, dimethylacetamide or N-methyl-pyrrolidone. Further suitable solvents are alcohols, such as methanol, ethanol or butanol.

Examples of suitable metal salts are acetates, sulfates or halogen salts, preferably with the metal being in oxidation state II+.

The compounds of the invention are eminently suitable for the coloring of melts of synthetic polar and non polar polymers.

Synthetic polar polymers are for example are polyamide, polyester, polycarbonate or ABS. Preferred polyamides are, for example polycondensation products or addition polymerization products of dicarboxylic acids and diamines, e.g. of adipic acid and hexamethylenediamine, of lactams, e.g. ε-caprolactam, or of aminocarboxylic acids, e.g. ω-aminoundecanoic acid.

Synthetic non-polar polymers are for example polyethylene, in particular low or high density polyethylene and polypropylene.

The polymer melt is mixed with the colorant by conventional methods - for example, in melt spinning, injection molding, extrusion or film blowing machines.

The novel dyes of formulae (I) and (II) give red to magenta coloration in synthetic non polar or polar polymers, such as for example polyethylene, polypropylene, ABS, polyester, polycarbonate or polyamides.

The novel dyes of the formulae (I) and (II) are highly compatible with the synthetic polymer substrate and they are extremely stable to the heat stress which is necessarily part of the coloring of synthetic polymers. Further, the mass-colored substrates display excellent fastness properties, in particular light fastness.

The novel compounds of the formulae (I) and (II) are also suitable as colorants in electrophotographic toners and developers, such as one- or two-component powder toners (also called one- or two-component developers), magnetic toners, liquid toners, polymerization toners and specialty toners (literature: L.B. Schein, "Electrophotography and Development Physics"; Springer Series in Electrophysics 14, Springer Verlag, 2^{nd} Edition, 1992).

Typical toner binders are addition polymerization, polyaddition and polycondensation resins, such as styrene, styrene-acrylate, styrene-butadiene, acrylate, polyester and phenol-epoxy resins, polysulphones, polyurethanes, individually or in combination, and also polyethylene and polypropylene, which may comprise further constituents, such as charge control agents, waxes or flow assistants, or may be modified subsequently with these additives.

The novel compounds of the formulae (I) and (II) are suitable, furthermore, as colorants in powders and powder coating materials, especially in triboelectrically or electrokinetically sprayable powder coating materials which are used for the surface coating of articles made, for example, from metal, wood, plastic, glass, ceramic, concrete, textile material, paper or rubber (J.F. Hughes, "Electrostatics Powder Coating" Research Studies, John Wiley & Sons, 1984).

Powder coating resins that are typically employed are epoxy resins, carboxyl- and hydroxyl-containing polyester resins, polyurethane resins and acrylic resins, together with customary hardeners. Combinations of resins are also used. For example, epoxy resins are frequently employed in combination with carboxyl- and hydroxyl-containing polyester resins. Typical hardener components (as a function of the resin system) are, for example, acid anhydrides, imidazoles and also dicyanodiamide and its derivatives, blocked isocyanates, bisacylurethanes, phenolic and melamine resins, triglycidyl isocyanurates, oxazolines and dicarboxylic acids.

In addition, the novel compounds of the formulae (I) and (II) are suitable as colorants in ink-jet inks, both aqueous and non-aqueous, and in those inks which operate in accordance with the hot-melt process.

In the examples below, all parts are parts by weight.

### EXAMPLE 1

10 parts of 5,6-diamino-N,N-diethylbenzimidazolone-2 and 23 parts of 1-amino-anthraquinone-2-aldehyde are suspended in 100 parts of N,N-dimethylformamide. 0.1 part of acetic acid acid is then added to the red solution, and the reaction mixture is heated at 140°C for 8 hours under nitrogen atmosphere. After cooling to 25°C, the suspension is then diluted with 100 parts of methanol and stirred for 30 minutes. The suspension is then filtered and the cake is washed with methanol and dried. This gives 29 parts of a red-violet colored powder.

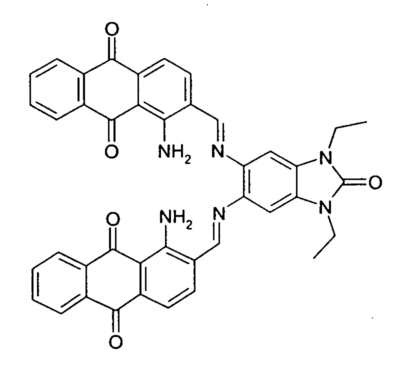

### EXAMPLE 2

15 parts of 2,3-diaminoquinoxaline and 32 parts of 1-amino-anthraquinone-2-aldehyde are suspended in 150 parts of N,N-dimethylformamide. 0.5 part of acetic acid acid is then added to the red solution, and the reaction mixture is heated at 140°C for 8 hours under nitrogen atmosphere. After cooling to 25°C, the suspension is then diluted with 150 parts of methanol and stirred for 30 minutes. The suspension is then filtered and the cake is washed with methanol and dried. This gives 38 parts of a dark violet-colored powder.

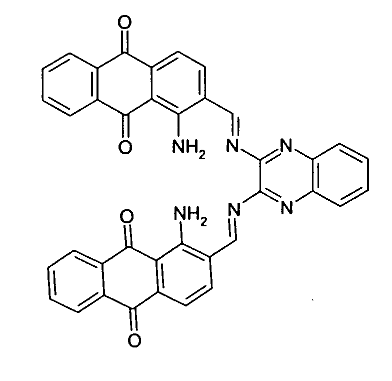

### EXAMPLE 3

5 parts of dye described in example 1 are suspended with 2 parts of nickel chloride hexahydrate in 40 parts of N,N-dimethylformamide. The reaction mixture is heated at 140°C for 8 hours under nitrogen atmosphere. After cooling to 25°C, the suspension is then filtered, the cake is washed with methanol and dried. 5 parts of a violet powder are obtained

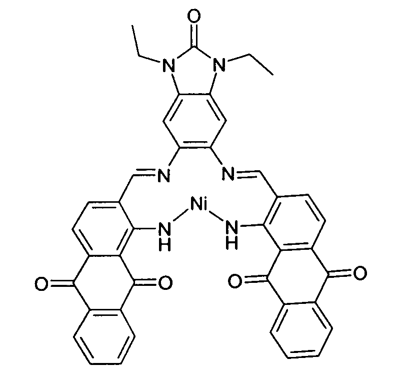

### EXAMPLE 4

5 parts of the dye described in example 2 are suspended with 2 parts of nickel chloride hexahydrate in 40 parts of N,N-dimethylformamide. The reaction mixture is heated at 140°C for 8 hours under nitrogen atmosphere. After cooling to 25°C, the suspension is then filtered, the cake is washed with methanol and dried. 5 parts of a violet powder are obtained

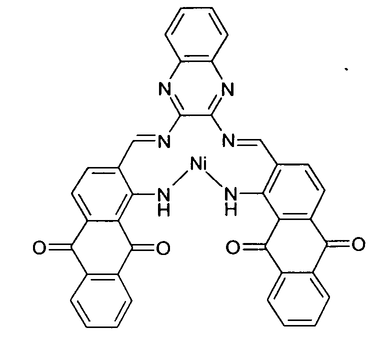

### Use Examples in Polymeric Fibres

### USE EXAMPLE 1 (1% of the compound of example 1 in polypropylene fibres)

100 parts of polypropylene in the form of a powder are mixed with 0.1 and with 1.0 part respectively of the dye from Examples 1 in powder form in a drum mixer. After a short time, the powder is uniformly distributed and adheres to the granules. After about 10 minutes, the mixture is dried at 120°C for 16 hours, transferred to a melt spinning machine and following a residence time of about 8 minutes is spun to fibers at 275-280°C under a nitrogen atmosphere. The colored fibers are extremely lightfast.

All other known synthetic polymers can be mass-colored in the same way, e.g. (HD/LD) polyethylene, polyamides, polyesters, ABS, polycarbonates.

### USE EXAMPLE 2 (0.1% of the compound of Example 1 in polyamide fibres)

100 parts of polycaprolactam in the form of a powder are mixed in a drum mixer with 0.1 parts of compound 1 in powder form. After a short time, the powder is uniformly distributed and adheres to the granules. After about 10 minutes, the mixture is dried at 120°C for 16 hours, transferred to a melt spinning machine and following a residence time of about 8 minutes is spun to fibres at 275-280°C under a nitrogen atmosphere. The violet colored polyamide fibres are extremely lightfast.

### USE EXAMPLE 3 (0.1 % of the compound of Example 1 in polyester fibres)

Polyester fibres containing 0.1 parts of compound 1 have been prepared according to the following method: the polyester is fused and extruded through a drawing plate at constant rate by gear pump regulation. The spinning machine is heated during 2 hours at temperatures of 260-265°C under pressure of 80 bars. The drawing plate is heated in an oven at 350°C for at least 30 minutes. The obtained fibres are recovered on a bobbin. The obtained fibres provide a strong violet color with excellent light and weather fastness.

## Claims

1. Compounds of the formulae (I) and (II) 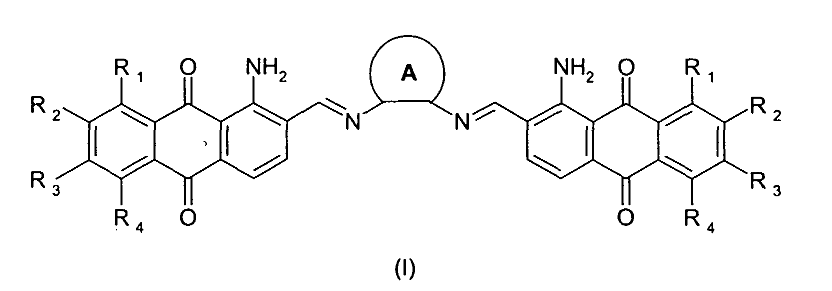 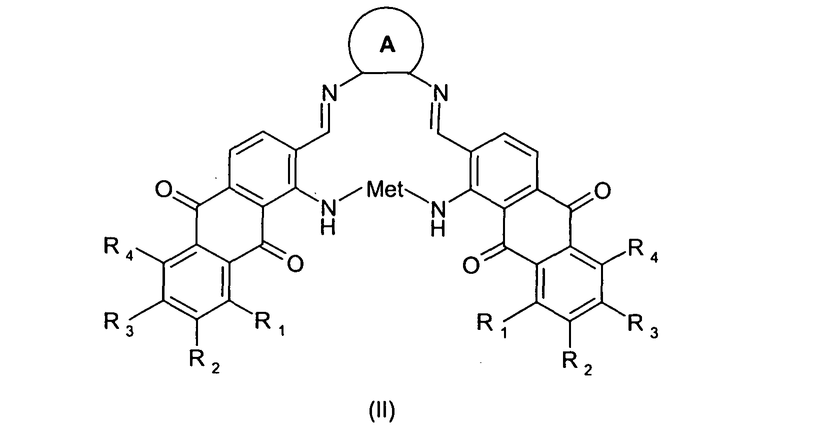
R₁, R₂, R₃ and R₄ are independently hydrogen, halogen, R₁₁R₁₂N-, R₁₂-O- or R₁₂-S-, in which R₁₁ and R₁₂ are independently hydrogen, C₁-C₆-alkyl, C₆-C₁₀-aryl, in which the alkyl and/or aryl radicals can be substituted by hydroxyl, C₁-C₆-alkyl, C₆-C₁₀-aryl, C₁-C₆-alkoxy, C₆-C₁₀-aryloxy or halogen,
the nucleus A represents a substituted or unsubstituted annealed aromatic ring system comprising at least one heteroatom in either the first or the second ring or in both;
Met is a metal in its II+ oxidation state.

2. Compounds according to Claim 1, **characterized in that**
R₁, R₂, R₃, R₄ are independently hydrogen, chlorine, bromine, methoxy, ethoxy, phenyloxy, -NH-C₆H₄-OCH₃, -O-C₆H₄-OCH₃ or -S-C₆H₄-OCH₃, and
the nucleus A represents a substituted or unsubstituted annealed aromatic ring system comprising at least one nitrogen atom in either the first or the second ring or in both.

3. Compounds according to Claim 1, **characterized in that** the the nucleus A is selected from one of the moieties (1) to (4) 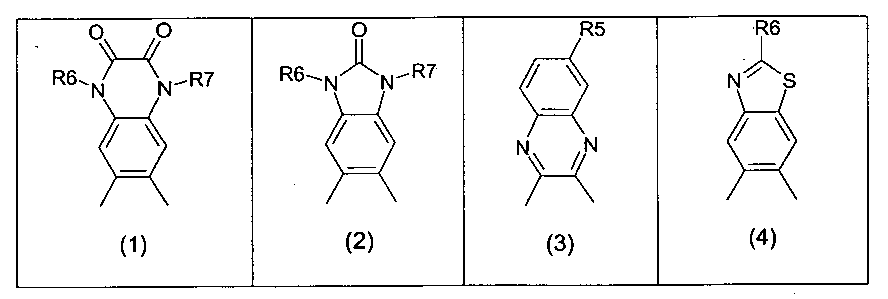 wherein
R₅ are independently hydrogen, C₁-C₂₀-alkyl, halogen, R₁₁R₁₂N-, R₁₂-O- or R₁₂-S-, in which R₁₁ and R₁₂ are independently hydrogen, C₁-C₆-alkyl, C₆-C₁₀-aryl, in which the alkyl and/or aryl radicals can be substituted by hydroxyl, C₁-C₆-alkyl, C₆-C₁₀-aryl, C₁-C₆-alkoxy, C₆-C₁₀-aryloxy or halogen;
R₆ and R₇ are independently hydrogen, C₁-C₂₀-alkyl, C₆-C₁₀-aryl, 2,2,6,6-tetramethylpiperidinyl, in which the alkyl and/or aryl radicals can be substituted by hydroxyl, C₁-C₂₀-alkyl, C₆-C₁₀-aryl, C₁-C₆-alkoxy, C₆-C₁₀-aryloxy or halogen;
Met is a metal selected from nickel, copper or iron in its II+ oxidation state.

4. Compounds according to Claim 3, **characterized in that**
R₅ is hydrogen, chlorine, bromine, methoxy, ethoxy, phenoxy, nitro;
R₆ and R₇ are independently hydrogen, C₁-C₁₀-alkyl, C₆-C₁₀-aryl, in which the alkyl and/or aryl radicals can be substituted by hydroxyl, C₁-C₁₀-alkyl, C₆-C₁₀-aryl, C₁-C₆-alkoxy, C₆-C₁₀-aryloxy or halogen,
Met is nickel, copper or iron in its II+ oxidation state.

5. Process for preparing a compound according to one of claims 1 to 4, **characterized in that** a 1-amino-anthraquinone-2-aldehyde of formula (III) 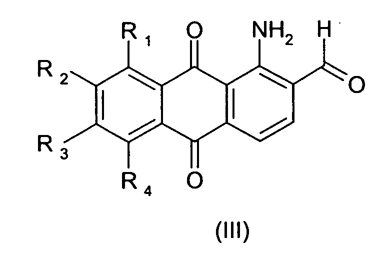 is condensed with a di-amine or the salt of a di-amine of formula (IV) 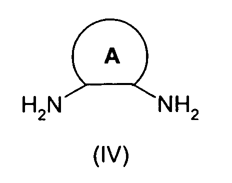 wherein the nucleus A is defined as in claims 1 to 4.

6. Process for preparing a compound according to claim 5, **characterized in that** the condensation is conducted without solvent in the melt at temperatures between 150°C and 300°C.

7. Process for preparing a compound according to claim 5, **characterized in that** the condensation is conducted in an inert organic solvent at temperatures between 25°C and 300°C.

8. Use of a compound according to any one of claims 1 to 4 for mass-coloring polar synthetic polymers, preferably polyamides, polyesters, ABS, polycarbonates.

9. Use of a compound according to any one of claims 1 to 4 for mass-coloring non polar synthetic polymers, preferably polyethylene or polypropylene.

10. Mass-colored polymer fibres manufactured from mass-colored polar or non polar synthetic polymers comprising a compound according to any one of claims 1 to 4.
